Europäisches Patentamt

European Patent Office

Office européen des brevets

(19)

(11) Veröffentlichungsnummer: **0 115 340**
**B1**

(12) **EUROPÄISCHE PATENTSCHRIFT**

(45) Veröffentlichungstag der Patentschrift:
**21.09.88**

(21) Anmeldenummer: **84100817.0**

(22) Anmeldetag: **26.01.84**

(51) Int. Cl.⁴: **B 23 B 41/00, B 23 Q 37/00**

(54) **Profilstahlbearbeitungsanlage.**

(30) Priorität: **01.02.83 DE 3303319**

(43) Veröffentlichungstag der Anmeldung:
**08.08.84 Patentblatt 84/32**

(45) Bekanntmachung des Hinweises auf die Patenterteilung:
**21.09.88 Patentblatt 88/38**

(84) Benannte Vertragsstaaten:
**AT BE CH DE FR GB IT LI LU NL SE**

(56) Entgegenhaltungen:
**DE-A-2 722 073**
**FR-A-486 277**
**JP-U-47 016 475**
**US-A-3 253 484**
**US-A-3 548 686**
**US-A-3 735 907**
**US-A-3 934 963**
**US-A-4 102 592**

(73) Patentinhaber: **Firma Muhr und Bender, Kölner Strasse 99, D-5952 Attendorn (DE)**

(72) Erfinder: **Roschiwal, Helmut, Ulrichsmahd 16, D-8900 Augsburg (DE)**
Erfinder: **Schmidt, Herbert, Eichenstrasse 13, D-8900 Augsburg (DE)**
Erfinder: **Schink, Karl, Heidenstrasse 12, D-5952 Attendorn- Dünschede (DE)**

(74) Vertreter: **Gesthuysen, Hans Dieter, Dipl.- Ing., Patentanwälte Gesthuysen + von Rohr Huyssenallee 15 Postfach 10 13 33, D-4300 Essen 1 (DE)**

LIBER, STOCKHOLM 1988

EP 0 115 340 B1

**Beschreibung**

Die Erfindung betrifft eine Profilstahlbearbeitungsanlage, insbesondere für die Bearbeitung von Winkelprofilen, mit mindestens einer Bearbeitungsstation, die mindestens eine Bearbeitungseinrichtung mit mindestens einem Bearbeitungswerkzeug aufweist, insbesondere mit mindestens einer Bohranlage, die mindestens eine Bohreinrichtung mit mindestens einem Bohrwerkzeug aufweist, mit einer Werkstückauflage und mit einer eine bestimmte Werkstücktransportrichtung vorgebenden Werkstücktransporteinrichtung, wobei die Werkstückauflage einen während eines Bearbeitungsvorganges unter einem spitzen Winkel zur Waagerechten liegenden Abschnitt für einen Schenkel des zu bearbeitenden Werkstückes aufweist und die Bearbeitungseinrichtung einerseits zwecks Einstellung des Streichmaßes - Abstand zwischen einem Ausgangspunkt an der Werkstückauflage und der Wirkzentrale des Bearbeitungswerkzeuges - und andererseits zwecks Anstellung des Bearbeitungswerkzeuges verfahrbar ist.

Profilstahlbearbeitungsanlagen der zuvor angesprochenen Art sind in vielen Ausführungsformen bekannt. Dabei können zu solchen Profilstahlbearbeitungsanlagen neben einer vorzugsweise als Bohr- und/oder Stanzanlage ausgeführten Bearbeitungsstation noch weitere Bearbeitungsstationen gehören, z. B. - in Werkstücktransportrichtung gesehen - vor der Bohr- und/oder Stanzanlage noch eine Signieranlage und hinter der Bohr- und/oder Stanzanlage noch eine Schneidanlage, z. B. eine Schere und/oder eine Säge.

Für die der Erfindung zugrundeliegende Problematik ist nicht wesentlich, um was für eine Profilstahlbearbeitungsanlage es sich im einzelnen handelt und welche Bearbeitungsstationen insgesamt vorgesehen sind. Wesentlich ist nur, daß die Werkstückauflage so ausgebildet ist, daß während des Bearbeitungsvorganges mindestens ein Schenkel des zu bearbeitenden Werkstückes unter einem spitzen Winkel zur Waagerechten liegt, also einen entsprechenden Abschnitt zur richtigen Orientierung dieses Schenkels des Werkstückes aufweist. Das hat die Konsequenz, daß die Bearbeitungseinrichtung für die Streichmaßeinstellung im Ergebnis in einer schrägen Ebene verfahren werden muß, nämlich in einer parallel zu dem zu bearbeitenden Schenkel des zu bearbeitenden Werkstückes bzw. zu dem entsprechenden Abschnitt der Werkstückauflage und damit unter einem spitzen Winkel zur Waagerechten verlaufenden Ebene.

Im Stand der Technik, von dem die Erfindung ausgeht (JP-U-4 716 475/1972), wird die Bearbeitungseinrichtung für die Streichmaßeinstellung tatsächlich in der zuvor erläuterten schrägen Ebene verfahren. Das bringt auch eine Reihe von Problemen mit sich; z. B. ist in der Regel ein Gewichtsausgleich erforderlich. Folglich liegt der Erfindung die Aufgabe zugrunde, eine Profilstahlbearbeitungsanlage der in Rede stehenden Art anzugeben, bei der die Streichmaßeinstellung einfacher realisiert werden kann.

Die erfindungsgemäße Profilstahlbearbeitungsanlage löst die zuvor aufgezeigte Aufgabe nach dem kennzeichnenden Teil von Anspruch 1 dadurch, daß die Bearbeitungseinrichtung zwecks Einstellung des Streichmaßes in der Waagerechten, senkrecht zur Werkstücktransportrichtung verfahrbar ist.

Erfindungsgemäß ist die an sich simple Tatsache ausgenutzt worden, daß das an sich für die Streichmaßeinstellung erforderliche Verfahren der Bearbeitungseinrichtung in einer schrägen Ebene auch dadurch realisiert werden kann, daß die Bearbeitungseinrichtung einfach in der Waagerechten verfahren wird, - wenn man als Streichmaß den Abstand zwischen einem vorgegebenen Ausgangspunkt und der Wirkzentralen des Bearbeitungswerkzeuges versteht und berücksichtigt, daß ein Streichmaß von x ein Verfahren der Bearbeitungseinrichtung in der Waagerechten von x multipliziert mit dem reziproken Wert des Cosinus des Winkels zwischen dem zu bearbeitenden Schenkel des zu bearbeitenden Werkstückes bzw. dem Abschnitt der Werkstückauflage und der Waagerechten erforderlich macht.

Im einzelnen gibt es verschiedene Möglichkeiten, die beanspruchte Profilstahlbearbeitungsanlage auszugestalten und weiterzubilden, was im folgenden lediglich beispielhaft erläutert werden soll.

Zunächst kann es sich empfehlen, die beanspruchte Profilstahlbearbeitungsanlage so auszugestalten, daß die Bearbeitungseinrichtung einen Verfahrschlitten aufweist und der Verfahrschlitten in der Waagerechten, senkrecht zur Werkstücktransportrichtung verfahrbar ist. Im einzelnen kann man dabei, wenn der Bearbeitungseinrichtung ein der Streichmaßeinstellung dienender Verfahrantrieb - mit einem Verfahrmotor und einem Getriebe - zugeordnet ist, den der Streichmaßeinstellung dienenden Verfahrantrieb mit einer Verfahrspindel versehen und den Verfahrschlitten der Bearbeitungseinrichtung mit Hilfe der Verfahrspindel in der Waagerechten, senkrecht zur Werkstücktransportrichtung verfahren.

Zuvor ist bereits dargelegt worden, daß man bei der Anwendung der erfindungsgemäßen Lehre berücksichtigen muß, daß ein Streichmaß von x ein Verfahren der Bearbeitungseinrichtung in der Waagerechten von x multipliziert mit dem reziproken Wert des Cosinus des Winkels zwischen dem zu bearbeitenden Schenkel des zu bearbeitenden Werkstückes und der Waagerechten erforderlich macht. Darum geht Anspruch 4 dahin, bei der Übersetzung des Getriebes, das zu dem der Streichmaßeinstellung dienenden Verfahrantrieb gehört, als Faktor den reziproken Wert des Cosinus des Winkels zwischen dem zu bearbeitenden Schenkel des zu bearbeitenden Werkstückes bzw. dem Abschnitt der Werkstückauflage und der Waagerechten zu berücksichtigen. Dann muß der der Streichmaßeinstellung dienende Verfahrmotor - ohne diesen Faktor - als Verfahrweg exakt das einzustellende Streichmaß realisieren. (Da in modernen Profilstahlbearbeitungsanlagen der hier in Rede stehenden Art u. a. auch das Streichmaß elektronisch eingegeben und gesteuert wird, kann der in Rede stehende Faktor natürlich auch innerhalb der Elektronik berücksichtigt werden.)

Die Anwendung der bisher beschriebenen Lehre der Erfindung führt zwar zu der jeweils gewollten Einstellung des Streichmaßes, ohne weitere Maßnahmen aber auch zu einer ungewollten Veränderung der Anstellung des Bearbeitungswerkzeuges, und zwar weil das Verfahren der Bearbeitungseinrichtung in der Waagerechten neben der gewollten Komponente in einer zu der Ebene des zu bearbeitenden Schenkels des zu bearbeitenden Werkstückes parallelen Ebene, also der Ebene parallel zu dem entsprechenden Abschnitt der Werkstückauflage, auch eine eigentlich ungewollte Komponente senkrecht zu dieser Ebene hat. Die Lösung dieses Problems gelingt nun dann, wenn die Bearbeitungseinrichtung zwecks Anstellung senkrecht zum Abschnitt der Werkstückauflage, also senkrecht zum zu bearbeitenden Schenkel des zu bearbeitenden Werkstückes, und senkrecht zur Werkstücktransportrichtung verfahrbar ist, dadurch, daß die Bearbeitungseinrichtung gleichzeitig so in der Waagerechten und senkrecht zum Abschnitt der Werkstückauflage verfahren wird, daß sich während der Streichmaßeinstellung die Anstellung nicht verändert. D. h. also letztlich, daß die Bearbeitungseinrichtung zwecks Einstellung des Streichmaßes sowohl in der Waagerechten als auch in der Senkrechten, senkrecht zur Werkstücktransportrichtung verfahrbar ist. Zur Realisierung der zuvor erläuterten Ausgestaltung empfiehlt sich eine Konstruktion, die dadurch gekennzeichnet ist, daß die Bearbeitungseinrichtung während des der Streichmaßeinstellung dienenden Verfahrens in der Waagerechten senkrecht zum Abschnitt der Werkstückauflage, also senkrecht zum zu bearbeitenden Schenkel des zu bearbeitenden Werkstückes, um einen Anstellkorrekturweg verfahren wird, der gleich ist dem Streichmaß multipliziert mit dem Tangens des Winkels zwischen dem Abschnitt der Werkstückauflage und der Waagerechten bzw. gleich ist dem Streichmaßeinstellweg in der Waagerechten multipliziert mit dem Sinus des Winkels zwischen dem Abschnitt der Werkstückauflage und der Waagerechten.

Der zuvor erwähnte Anstellkorrekturweg kann unterschiedlich realisiert werden. Bei einer Profilstahlbearbeitungsanlage, bei der die Bearbeitungseinrichtung einen der Anstellung des Bearbeitungswerkzeuges dienenden Anstellantrieb, vorzugsweise einen solchen mit einem Anstellmotor und einem Getriebe, aufweist, kann man vorsehen, daß die Bearbeitungseinrichtung mittels des der Anstellung dienenden Anstellantriebes um den Anstellkorrekturweg verfahrbar ist. Es ist jedoch auch möglich, einen besonderen Anstellkorrekturantrieb vorzusehen und die Bearbeitungseinrichtung mittels des Anstellkorrekturantriebs um den Anstellkorrekturweg zu verfahren. Schließlich kann die Bearbeitungseinrichtung auch mittels des der Streichmaßeinstellung dienenden Verfahrantriebs um den Anstellkorrekturweg verfahren werden, beispielsweise dann, wenn man ein weiteres Getriebe mit einer entsprechenden Übersetzung vorsieht.

Im folgenden wird die Erfindung anhand einer lediglich ein Ausführungsbeispiel darstellenden Zeichnung näher erläutert; es zeigt

Fig. 1 eine Seitenansicht einer bevorzugten Ausführungsform einer erfindungsgemäßen Profilstahlbearbeitungsanlage, - mit einer Bohranlage als Bearbeitungsstation,

Fig. 2 eine Draufsicht auf einen Teil der Profilstahlbearbeitungsanlage nach Fig. 1,

Fig. 3 in gegenüber den Fig. 1 und 2 vergrößerter Darstellung, eine Stirnansicht auf die ausgangsseitig bei der Profilstahlbearbeitungsanlage nach den Fig. 1 und 2 vorgesehene hydraulische Schere,

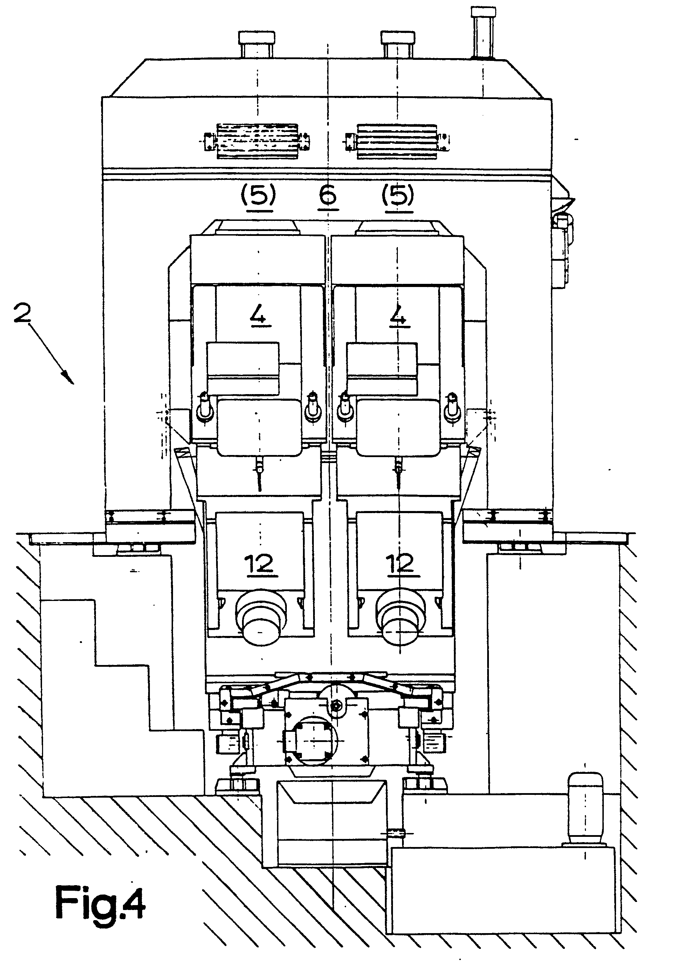

Fig. 4 wiederum in gegenüber den Fig. 1 und 2 vergrößerter Darstellung, eine Seitenansicht der als Bohranlage ausgeführten Bearbeitungsstation der Profilstahlbearbeitungsanlage nach den Fig. 1 und 2 und

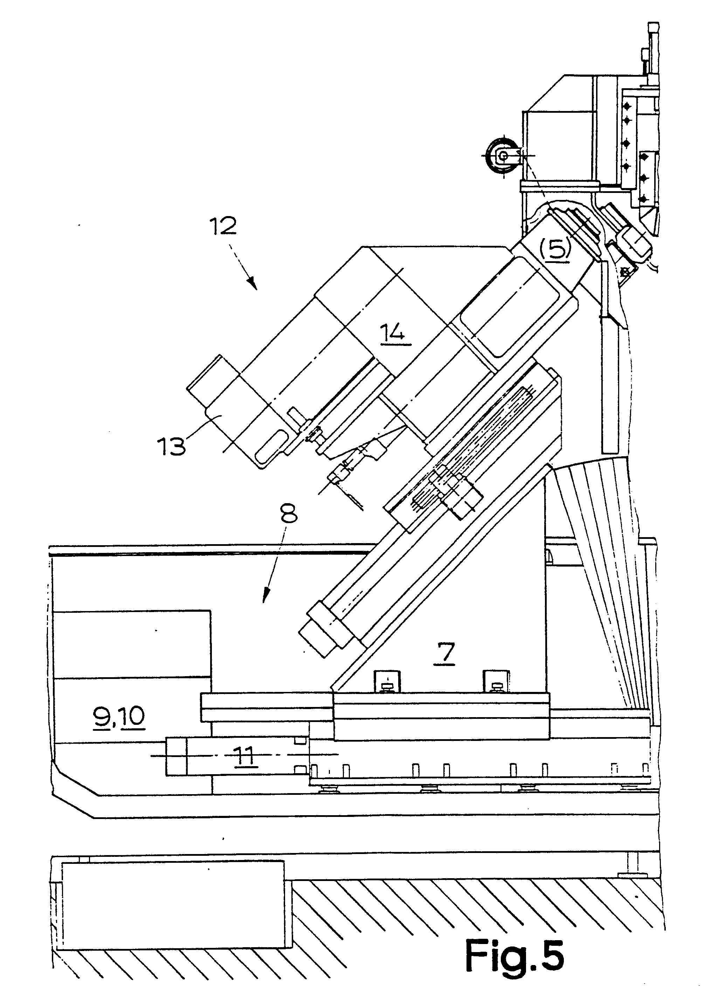

Fig. 5 eine Stirnansicht eines Teils der in Fig. 4 dargestellten, als Bohranlage ausgeführten Bearbeitungsstation der Profilstahlbearbeitungsanlage nach den Fig. 1 und 2.

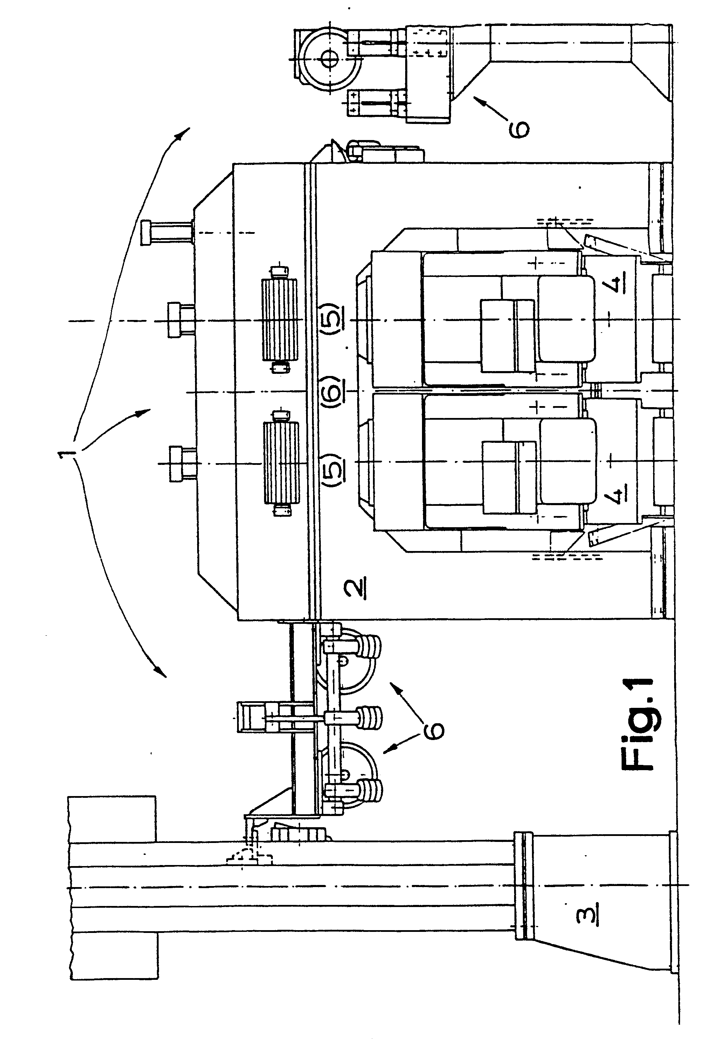

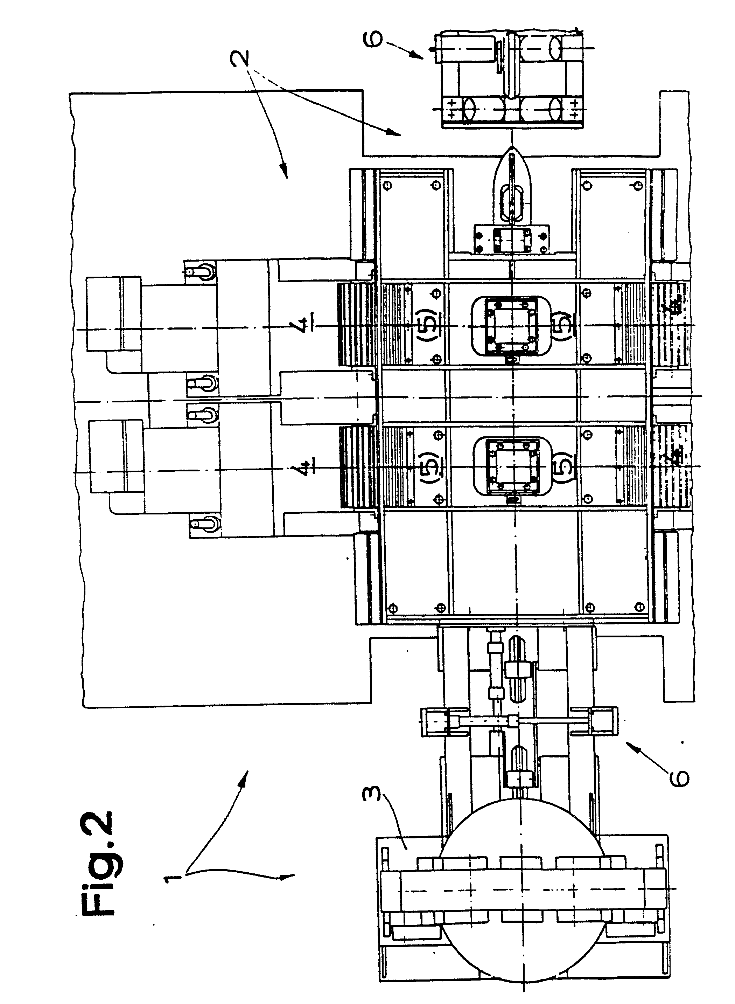

Die in den Fig. 1 und 2 dargestellte Profilstahlbearbeitungsanlage 1 ist für die Bearbeitung von Winkelprofilen bestimmt; Winkelprofile sind also die nicht dargestellten Werkstücke, die auf der Profilstahlbearbeitungsanlage 1 bearbeitet werden. Im dargestellten Ausführungsbeispiel gehören zu der Profilstahlbearbeitungsanlage 1 zwei Bearbeitungsstationen 2, 3, wobei die Bearbeitungsstation 2 als Bohranlage und die Bearbeitungsstation 3 als Schneidanlage, nämlich als hydraulische Schere, ausgeführt sind. Zu der hier nur interessierenden, als Bohranlage ausgeführten Bearbeitungsstation 2 gehören im Ausführungsbeispiel vier als Bohreinrichtungen ausgeführte Bearbeitungseinrichtungen 4 mit jeweils einem hier als Bohrwerkzeug ausgeführten Bearbeitungswerkzeug 5. Im übrigen gehören zu der dargestellten Profilstahlbearbeitungsanlage 1 eine Werkstückauflage 6 und eine nicht dargestellte Werkstücktransporteinrichtung.

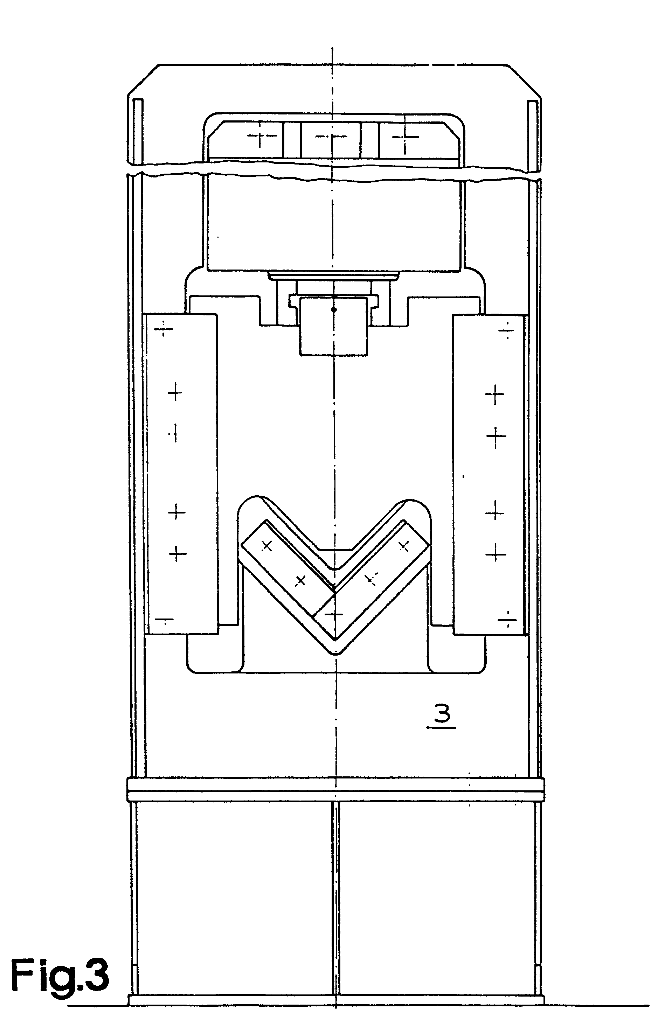

Für die der Erfindung zugrundeliegende Problematik ist, wie eingangs bereits ausgeführt, nicht wesentlich, um was für eine Profilstahlbearbeitungsanlage 1 es sich im einzelnen handelt. Wesentlich ist nur, daß die Werkstückauflage 6 so ausgebildet ist, daß während des Bearbeitungsvorganges mindestens ein Schenkel des zu bearbeitenden Werkstückes unter einem spitzen Winkel zur Waagerechten liegt. Erreicht wird das durch einen entsprechend orientierten Abschnitt der Werkstückauflage 6. Im dargestellten Ausführungsbeispiel werden als Werkstücke Winkelprofile bearbeitet, so daß beide Schenkel des zu bearbeitenden Werkstückes unter einem spitzen Winkel zur Waagerechten liegen; das kann besonders deutlich der Fig. 3 entnommen werden.

Die im dargestellten Ausführungsbeispiel als Bohreinrichtung ausgeführten Bearbeitungseinrichtungen 4 sind einerseits für die Einstellung des Streichmaßes, andererseits für die Anstellung der Bearbeitungswerkzeuge 5 verfahrbar. Da die Werkstückauflage 6 so ausgebildet ist, daß während des Bearbeitungsvorganges die Schenkel des zu bearbeitenden Werkstückes unter einem spitzen Winkel zur Waagerechten liegen, nämlich entsprechende Abschnitte aufweisen, müssen die Bearbeitungseinrichtungen 4 für die Streichmaßeinstellung im Ergebnis in schrägen Ebenen verfahren werden, nämlich in parallel zu den zu bearbeitenden Schenkeln des zu bearbeitenden Werkstückes, d. h. parallel zu den Abschnitten der Werkstückauflage 6, und damit unter einem spitzen Winkel zur Waagerechten verlaufenden Ebenen.

Erfindungsgemäß sind nun die als Bohreinrichtungen ausgeführten Bearbeitungseinrichtungen 4 zwecks Einstellung des Streichmaßes in der Waagerechten, senkrecht zur Werkstücktransportrichtung verfahrbar. Im einzelnen weist jede Bearbeitungseinrichtung 4 einen Verfahrschlitten 7 auf und ist jeder Verfahrschlitten 7 in der Waagerechten, senkrecht zur Werkstücktransportrichtung verfahrbar. Im übrigen ist ein Ausführungsbeispiel einer erfindungsgemäßen Profilstahlbearbeitungsanlage 1 dargestellt, bei der jeder Bearbeitungseinrichtung 4 ein der Streichmaßeinstellung dienender Verfahrantrieb 8 - mit einem Verfahrmotor 9 und einem Getriebe 10 - zugeordnet ist. Dabei weist jeder der Streichmaßeinstellung dienende Verfahrantrieb 8 eine Verfahrspindel 11 auf und sind die Verfahrschlitten 7 der Bearbeitungseinrichtung 4 mit Hilfe der Verfahrspindeln 11 in der Waagerechten, senkrecht zur Werkstücktransportrichtung verfahrbar.

Bei der dargestellten Profilstahlbearbeitungsanlage 1 ist die Tatsache ausgenutzt worden, daß das an sich für die Einstellung des Streichmaßes erforderliche Verfahren der Bearbeitungseinrichtungen 4 in einer schrägen Ebene auch dadurch realisiert werden kann, daß die Bearbeitungseinrichtungen 4 in der Waagerechten verfahren werden, - wenn man berücksichtigt, daß man als Streichmaß den Abstand zwischen einem vorgebenen Ausgangspunkt und der Wirkzentrale des Bearbeitungswerkzeuges 5 versteht, und ferner berücksichtigt, daß ein Streichmaß von x ein Verfahren der Bearbeitungseinrichtungen 4 in der Waagerechten von x multipliziert mit dem reziproken Wert des Cosinus des Winkels zwischen dem Abschnitt der Werkstückauflage 6, also zwischen dem zu bearbeitenden Schenkel des zu bearbeitenden Werkstückes, und der Waagerechten erforderlich macht. Davon ausgehend ist bei der dargestellten Profilstahlbearbeitungsanlage bei der Übersetzung des Getriebes 10, das zu dem der Streichmaßeinstellung dienenden Verfahrantrieb 8 gehört, als Faktor der reziproke Wert des Cosinus des Winkels zwischen dem Abschnitt der Werkstückauflage 6, d. h. zwischen dem zu bearbeitenden Schenkel des zu bearbeitenden Werkstückes, und der Waagerechten berücksichtigt worden. Folglich realisiert der Verfahrmotor 9 des Verfahrantriebes 8 - ohne den zuvor angesprochenen Faktor - als Verfahrweg exakt das einzustellende Streichmaß.

Ohne weitere Maßnahmen würde die bisher beschriebene Lehre der Erfindung nicht nur zu der jeweils gewollten Einstellung des Streichmaßes führen, sondern gleichzeitig auch zu einer ungewollten Veränderung der Anstellung des Bearbeitungswerkzeuges 5, - weil das Verfahren der Bearbeitungseinrichtungen 4 in der Waagerechten neben den gewollten Komponenten auch eigentlich ungewollte Komponenten, nämlich Komponenten senkrecht zu den weiter oben erläuterten Ebenen hat. Im dargestellten Ausführungsbeispiel sind die Bearbeitungseinrichtungen 4 für die Anstellung senkrecht zum Abschnitt der Werkstückauflage 6, also senkrecht zu dem zu bearbeitenden Schenkel des zu bearbeitenden Werkstückes, und senkrecht zur Werkstücktransportrichtung verfahrbar. Bei dieser Ausführungsform läßt sich das zuvor angesprochene Problem dadurch eliminieren, daß die Bearbeitungseinrichtung 4 gleichzeitig so in der Waagerechten und senkrecht zum Abschnitt der Werkstückauflage 6 verfahren wird, daß sich während der Streichmaßeinstellung die Anstellung nicht verändert. Letztlich wird also die Bearbeitungseinrichtung 4 in der Waagerechten und in der Senkrechten, senkrecht zur Werkstücktransportrichtung verfahren.

Im einzelnen werden im dargestellten Ausführungsbeispiel die Bearbeitungseinrichtungen 4 während des der Streichmaßeinstellung dienenden Verfahrens in der Waagerechten senkrecht zum Abschnitt der Werkstückauflage 6 um einen Anstellkorrekturweg verfahren, der gleich ist dem Streichmaß multipliziert mit dem Tangens des Winkels zwischen dem Abschnitt der Werkstückauf lage 6 und der Waagerechten bzw. gleich ist dem Streichmaßeinstellweg in der Waagerechten multipliziert mit dem Sinus des Winkels zwischen dem Abschnitt der Werkstückauflage 6 und der Waagerechten. Auch hier gilt generell, daß der Abschnitt der Werkstückauflage 6 lagemäßig den zu bearbeitenden Schenkel des zu bearbeitenden Werkstückes definiert.

Da im Ausführungsbeispiel die Bearbeitungseinrichtungen 4 jeweils einen der Anstellung des Bearbeitungswerkzeuges 5 dienenden Anstellantrieb 12 mit einem Anstellmotor 13 und einem Getriebe 14 aufweisen, werden hier die Bearbeitungseinrichtungen 4 mittels des ansonsten der Anstellung dienenden Anstellantriebes 12 um den Anstellkorrekturweg verfahren. Alternativlösungen dazu sind aber auch, daß ein Anstellkorrekturantrieb vorgesehen ist und die Bearbeitungseinrichtung mittels des Anstellkorrekturantriebes um den Anstellkorrekturweg verfahrbar ist oder daß die Bearbeitungseinrichtung mittels des der Streichmaßeinstellung dienenden Verfahrantriebes um den Anstellkorrekturweg verfahrbar ist.

**Patentansprüche**

1. Profilstahlbearbeitungsanlage (1), insbesondere für die Bearbeitung von Winkelprofilen, mit mindestens einer Bearbeitungsstation (2), die mindestens eine Bearbeitungseinrichtung (4) mit mindestens einem Bearbeitungswerkzeug (5) aufweist, insbesondere mit mindestens einer Bohranlage, die mindestens eine Bohreinrichtung mit mindestens einem Bohrwerkzeug aufweist, mit einer Werkstückauflage (6) und mit einer eine bestimmte Werkstücktransportrichtung vorgebenden Werkstücktransporteinrichtung, wobei die Werkstückauflage (6) einen während eines Bearbeitungsvorganges unter einem spitzen Winkel zur Waagerechten liegenden Abschnitt für einen Schenkel des zu bearbeitenden Werkstückes aufweist und die Bearbeitungseinrichtung (4) einerseits zwecks Einstellung des Streichmaßes - Abstand zwischen einem Ausgangspunkt an der Werkstückauflage (6) und der Wirkzentrale des Bearbeitungswerkzeuges (5) - und andererseits zwecks Anstellung des Bearbeitungswerkzeuges (5) verfahrbar ist, dadurch gekennzeichnet, daß die Bearbeitungseinrichtung (4) zwecks Einstellung des Streichmaßes in der Waagerechten, senkrecht zur Werkstücktransportrichtung verfahrbar ist.

2. Profilstahlbearbeitungsanlage (1) nach Anspruch 1, dadurch gekennzeichnet, daß die Bearbeitungseinrichtung (4) einen Verfahrschlitten (7) aufweist und der Verfahrschlitten (7) in der Waagerechten, senkrecht zur Werkstücktransportrichtung verfahrbar ist.

3. Profilstahlbearbeitungsanlage (1) nach Anspruch 2, wobei der Bearbeitungseinrichtung (4) ein der Streichmaßeinstellung dienender Verfahrantrieb (8) - mit einem Verfahrmotor (9) und einem Getriebe (10) - zugeordnet ist, dadurch gekennzeichnet, daß der der Streichmaßeinstellung dienende Verfahrantrieb (8) eine Verfahrspindel (11) aufweist und der Verfahrschlitten (7) der Bearbeitungseinrichtung (4) mit Hilfe der Verfahrspindel (11) in der Waagerechten, senkrecht zur Werkstücktransportrichung verfahrbar ist.

4. Profilstahlbearbeitungsanlage (1) nach Anspruch 3, dadurch gekennzeichnet, daß bei der Übersetzung des Getriebes (10), das zu dem der Streichmaßeinstellung dienenden Verfahrantrieb (8) gehört, als Faktor der reziproke Wert des Cosinus des Winkels zwischen dem Abschnitt der Werkstückauflage (6) und der Waagerechten berücksichtigt ist.

5. Profilstahlbearbeitungsanlage (1) nach einem der Ansprüche 1 bis 4, wobei die Bearbeitungseinrichtung (4) zwecks Anstellung senkrecht zum Abschnitt der Werkstückauflage (6) und senkrecht zur Werkstücktransportrichtung verfahrbar ist, dadurch gekennzeichnet, daß die Bearbeitungseinrichtung (4) gleichzeitig so in der Waagerechten und senkrecht zum Abschnitt der Werkstückauflage (6) verfahren wird, daß sich während der Streichmaßeinstellung die Anstellung nicht verändert.

6. Profilstahlbearbeitungsanlage (1) nach Anspruch 5, dadurch gekennzeichnet, daß die Bearbeitungseinrichtung (4) während des der Streichmaßeinstellung dienenden Verfahrens in der Waagerechten senkrecht zum Abschnitt der Werkstückauflage (6) um einen Anstellkorrekturweg verfahren wird, der gleich ist dem Streichmaß multipliziert mit dem Tangens des Winkels zwischen dem Abschnitt der Werkstückauflage (6) und der Waagerechten bzw. gleich ist dem Streichmaßeinstellweg in der Waagerechten multipliziert mit dem Sinus des Winkels zwischen dem Abschnitt der Werkstückauflage (6) und der Waagerechten.

7. Profilstahlbearbeitungsanlage (1) nach Anspruch 6, wobei die Bearbeitungseinrichtung (4) einen der Anstellung dienenden Anstellantrieb (12), vorzugsweise mit einem Anstellmotor (13) und einem Getriebe (14), aufweist, dadurch gekennzeichnet, daß die Bearbeitungseinrichtung (4) mittels des der Anstellung dienenden Anstellantriebes (12) um den Anstellkorrekturweg verfahrbar ist.

8. Profilstahlbearbeitungsanlage (1) nach Anspruch 6, dadurch gekennzeichnet, daß ein Anstellkorrekturantrieb vorgesehen ist und die Bearbeitungseinrichtung mittels des Anstellkorrekturantriebes um den Anstellkorrekturweg verfahrbar ist.

9. Profilstahlbearbeitungsanlage (1) nach Anspruch 6, dadurch gekennzeichnet, daß die Bearbeitungseinrichtung mittels des der Streichmaßeinstellung dienenden Verfahrantriebes um den Anstellkorrekturweg verfahrbar ist.

## Claims

1. A sectional steel machining installation (1), particularly for the machining of angle sections, with at least one machining station (2) that possesses at least one machining equipment (4) with at least one machining tool (5), particularly with at least one drilling installation that possesses at least one drilling equipment with at least one drilling tool, with a workpiece holder (6) and with a workpiece transportation equipment providing for a particular direction of workpiece transport, in which the workpiece holder (6) possesses a portion for one side of the workpiece to be machined that during a machining process lies at a steep angle to the horizontal, and the machining equipment (4) is displaceable on one hand for the purpose of setting the stroke distance - the distance between a point of origin on the workpiece holder (6) and the centre to which the machining tool (5) is directed - and on the other hand for the purpose of adjusting the machining tool (5), characterized in that the machining equipment (4) is displaceable horizontally, at right angles to the direction of workpiece transportation, for the purpose of regulating the setting distance.

2. A sectional steel machining installation (1) according to Claim 1, characterized in that the machining equipment (4) possesses a sliding displacement carriage (7) that is displaceable horizontally, at right angles to the direction of workpiece transportation.

3. A sectional steel machining installation (1) according to Claim 2, in which a stroke distance setting displacement drive (8) - with a displacement motor (9) and a gearbox (10) - is associated with the machining equipment (4), characterized in that the stroke distance setting displacement drive (8) possesses a displacement spindle (11) and that with the aid of the displacement spindle (11) the displacement carriage (7) of the machining equipment (4) is displaceable horizontally at right angles to the direction of workpiece transportation.

4. A sectional steel machining installation (1) according to Claim 3, characterized in that the gear ratio of the gearbox (10) that belongs to the stroke distance setting displacement drive (8) takes account as a factor of the reciprocal value of the cosine of the angle between the portion of the workpiece holder (6) and the horizontal.

5. A sectional steel machining installation (1) according to one of Claims 1 to 4, in which for the purpose of adjustment the machining equipment (4) is displaceable at right angles to the portion of the workpiece holder (6) and at right angles to the direction of workpiece transportation, characterized in that the machining equipment (4) is displaced simultaneously in the horizontal direction and at right angles to the portion of the workpiece holder (6) in such a way that the adjustment does not change during setting of the stroke distance.

6. A sectional steel machining installation (1) according to Claim 5, characterized in that during the process used for setting the stroke distance the machining equipment (4) is displaced horizontally and at right angles to the portion of the workpiece holder (6) through an adjustment correction distance that equals the stroke distance multiplied by the tangent of the angle between the portion of the workpiece holder (6) and the horizontal, or alternatively is equal to the horizontal stroke distance setting movement multiplied by the sine of the angle between the portion of the workpiece holder (6) and the horizontal.

7. A sectional steel machining installation (1) according to Claim 6, in which the machining equipment (4) possesses an adjustment drive (12) used for the adjustment, preferably with an adjustment motor (13) and a gearbox (14), characterized in that the machining equipment (4) is displaceable through the adjustment correction distance by means of the adjustment drive (12) used to make the adjustment.

8. A sectional steel machining installation (1) according to Claim 6, characterized in that an adjustment correction drive is provided and the machining equipment is displaceable through the adjustment correction distance by means of the adjustment correction drive.

9. A sectional steel machining installation (1) according to Claim 6, characterized in that the machining equipment is displaceable through the adjustment correction distance by means of the stroke distance setting displacement drive.

## Revendications

1. Installation d'usinage d'acier profilé (1), en particulier, pour l'usinage de cornières, cette installation comportant au moins un poste d'usinage (2) comprenant au moins un dispositif d'usinage (4) pourru d'au moins un outil d'usinage (5) en particulier, au moins une installation de forage ayant au moins un dispositif de forage pourvu d'au moins un outil de forage, un support (6) pour une pièce de travail et un dispositif de transport de pièces de travail assurant l'alimentation de ces dernières dans un sens de transport déterminé, le support (6) des pièces de travail comportant, pour une aile de la pièce de travail à usiner, un tronçon se situant sous un angle aigu par rapport à l'horizontale au cours d'un processus d'usinage et le dispositif d'usinage (4) pouvant être déplacé, d'une part, en vue de régler le trusquinage (distance entre un point de départ sur le support (6) des pièces de travail et le centre actif de l'outil d'usinage (5)) et, d'autre part, en vue d'assurer la mise en place de cet outil d'usinage (5), <u>caractérisée en ce que,</u> en vue de régler le trusquinage à l'horizontale, le dispositif d'usinage (4) peut être déplacé perpendiculairement au sens de transport des pièces de travail.

2. Installation d'usinage d'acier profilé (1) selon la revendication 1, <u>caractérisée en ce que</u> le dispositif d'usinage (4) comporte un chariot mobile (7), lequel peut se déplacer à l'horizontale perpendiculairement au sens de transport des pièces de travail.

3. Installation d'usinage d'acier profilé (1) selon la revendication 2, une commande d'avance (8) (comportant un moteur d'avance (9) et un mécanisme (10)) servant à régler le trusquinage étant attribuée au dispositif d'usinage (4), <u>caractérisée en ce que</u> la commande d'avance (8) servant à régler le trusquinage comporte une broche d'avance (11), tandis que le chariot d'avance (7) du dispositif d'usinage (4) peut être déplacé horizontalement à l'aide de la broche d'avance (11) perpendiculairement au sens de transport des pièces de travail.

4. Installation d'usinage d'acier profilé (1) selon la revendication 3, <u>caractérisée en ce que,</u> lors de la démultiplication du mécanisme (10) qui appartient à la commande d'avance (8) servant au réglage du trusquinage, il convient de tenir compte, comme facteur, de la valeur réciproque du cosinus de l'angle formé entre le tronçon du support (6) des pièces de travail et l'horizontale.

5. Installation d'usinage d'acier, profilé (1) selon une des revendications 1 à 4, le dispositif d'usinage (4) pouvant être déplacé, en vue de sa mise en place, perpendiculairement au tronçon du support (6) des pièces de travail et perpendiculairement au sens de transport de ces dernières, <u>caractérisée en ce que</u> le dispositif d'usinage (4) peut être déplacé simultanément dans le sens horizontal et perpendiculairement au tronçon du support (6) des pièces de travail de telle sorte que la mise en place ne change pas au cours du réglage du trusquinage.

6. Installation d'usinage d'acier profilé (1) selon la revendication 5, <u>caractérisée en ce que,</u> au cours du déplacement servant à régler le trusquinage, le dispositif d'usinage (4) est déplacé dans le sens horizontal perpendiculairement au tronçon du support (6) pour les pièces de travail sur un parcours de correction de mise en place qui est égal au trusquinage multiplié par la tangente de l'angle compris entre le tronçon du support (6) des pièces de travail et l'horizontale ou qui est égal au parcours de réglage du trusquinage dans le sens horizontal, multiplié par le sinus de l'angle compris entre le tronçon du support (6) pour les pièces de travail et l'horizontale.

7. Installation d'usinage d'acier profilé (1) selon la revendication 6, le dispositif d'usinage (4) comportant une commande (l2) servant à la mise en place et pourvue, de préférence, d'un moteur de mise en place (13) et d'un mécanisme (14), <u>caractérisée en ce que</u> le dispositif d'usinage (4) peut être déplacé sur un parcours de correction de mise en place au moyen de la commande (12) servant à la mise en place.

8. Installation d'usinage d'acier profilé (1) selon la revendication 6, <u>caractérisée en ce qu'on</u> prévoit une commande de correction de mise en place, tandis que le dispositif d'usinage peut être déplacé sur le parcours de correction de mise en place au moyen de la commande de correction de mise en place.

9. Installation d'usinage d'acier profilé (1) selon la revendication 6, caractérisée en ce que le dispositif d'usinage peut être déplacé sur le parcours de correction de mise en place au moyen de la commande d'avance servant au réglage du trusquinage.

Fig.1

Fig.2

**Fig.3**

3

Fig.4

Fig.5